Europäisches Patentamt

(19) European Patent Office

Office européen des brevets

(11) Numéro de publication: **0 126 745**

**B1**

⑫ **. FASCICULE DE BREVET EUROPEEN**

(45) Date de publication du fascicule du brevet: **02.09.87**

(21) Numéro de dépôt: **83903798.3**

(22) Date de dépôt: **29.11.83**

⑧⑧ Numéro de dépót international:
**PCT/FR83/00238**

(87) Numéro de publication internationale:
**WO 84/02186 07.06.84 Gazette 84/14**

(51) Int. Cl.⁴: **G 01 G 19/44,** G 01 G 3/14

(54) **APPAREIL DE PESAGE A JAUGES DE DEFORMATION, NOTAMMENT PESE-PERSONNE.**

(30) Priorité: **30.11.82 FR 8220040**

(43) Date de publication de la demande:
**05.12.84 Bulletin 84/49**

(45) Mention de la délivrance du brevet:
**02.09.87 Bulletin 87/36**

(84) Etats contractants désignés:
**BE CH DE GB LI NL SE**

(56) Documents cités:
**FR-A-2 177 923**
**FR-A-2 296 841**
**FR-A-2 441 839**
**FR-A-2 451 571**
**US-A-3 853 001**

**Experimental Mechanism, Vol. 15, No. 7, July 1975, (Westport, US) G.K. Spolek et al.: "Ambulatory-force measurement using an instrumental-shoe system", pages 271-274**

(73) Titulaire: **ARTIGUE, Francis**
**21 Chemin des Justices**
**F-91370 Verrières le Buisson (FR)**
(73) Titulaire: **CORMIER, Roland**
**40 Avenue Herbillon**
**F-94260 Saint Mandé (FR)**
(73) Titulaire: **FRANCOIS, Christian**
**96 Rue de Tolbiac**
**F-75013 Paris (FR)**
(73) Titulaire: **LEFETZ, André**
**23 Rue Clavel**
**F-75019 Paris (FR)**

(72) Inventeur: **ARTIGUE, Francis**
**21 Chemin des Justices**
**F-91370 Verrières le Buisson (FR)**
Inventeur: **CORMIER, Roland**
**40 Avenue Herbillon**
**F-94260 Saint Mandé (FR)**
Inventeur: **FRANCOIS, Christian**
**96 Rue de Tolbiac**
**F-75013 Paris (FR)**
Inventeur: **LEFETZ, André**
**23 Rue Clavel**
**F-75019 Paris (FR)**

(74) Mandataire: **Coutel, Jean-Claude**
**Cabinet AYMARD & COUTEL 20, rue Vignon**
**F-75009 Paris (FR)**

Courier Press, Leamington Spa, England.

EP 0 126 745 B1

## Description

L'invention est relative aux appareils de pesage du type à jauges de déformation, et elle s'applique en particulier aux prèse-personnes.

On connaît par le document FR—A—2 177 923 un appareil qui permet de mesurer une force, notamment un effort de flexion, à l'aide d'un barreau unique qui est solidarisé à ses extrémités respectivement ave un plateau d'application de la force et avec une assise de support, au moins deux ensembles de jauges de déformation étant fixés au barreau et étant sensibles à la flexion du barreau sous l'effet de la charge appliquée. Dans ce document, les déformations des jauges sont assimilées seulement à de la flexion alors que, en réalité, il se produit une certaine déformation de torsion due à la position du point d'application de la force.

On connaît également, par le document FR—A—2 441 839, un appareil de pesage à barreau unique dont les extrémités sont reliées fixement chacune à un bras qui, par une extrémité coudée, prend appui sur une embase et, par l'autre extrémité coudée, reçoit la charge. Des jauges de déformation sont montées sur le barreau, par exemple à 45°, pour mesurer les déformations de torsion. Dans ce document, on assimile les déformations des jauges à de la torsion pure alors que il se produit, en réalité, également des déformations de flexion qui ne sont par conséquent pas prises en compte, ce qui fausse la mesure.

L'invention a pour but de fournir un appareil du type indiqué qui, tout en étant de conception et de structure simples, donc à faible prix de revient, soit néanmoins fiable et précis et prenne en compte à la fois les déformations de flexion et de torsion.

A cet effet, l'appareil selon l'invention, comportant un barreau unique solidarisé à ses extrémités respectivement avec un plateau de réception de charge et avec une assise de support et au moins deux ensembles à jauges de déformation fixés au barreau, sensibles à la flexion du barreau sous l'effet de la charge appliquée, est caractérisé par le fait que ces ensembles, en association avec la zone du barreau avec laquelle ils coopèrent et avec un circuit de traitement des signaux émis par les jauges, ont la même sensibilité de mesure pour une même charge appliquée, et qu'il est prévu au moins un troisième ensemble à jauges de déformation fixé au barreau, sensible à la torsion du barreau sous l'effet de la charge appliquée, et un circuit de traitement des signaux émis par lesdits trois ensembles à jauges de déformation, comportant des moyens pour combiner lesdits signaux de manière à éliminer dans le signal sortant la composante résultant de la déformation du barreau en torsion.

De préférence, les deux premiers ensembles sensibles à la flexion comportent des jauges identiques coopérant avec le barreau dans des zones de même section.

En dehors des zones de mesure du moment de flexion, le barreau peut être des section et/ou de composition variables, notamment à ses extrémités de fixation ou dans la zone de réception de l'ensemble sensible à la torsion.

De préférence, cependant, le barreau est de section constante, par exemple polygonale (carrée, rectangulaire,...) ou courbe (ronde, elliptique,...) ou profilée (T, U, I, H, C, L,...).

Le barreau peut être plein ou tubulaire.

Suivant un mode de réalisation préfére, chaque ensemble comporte une seule jauge, la jauge de chaque ensemble sensible à la flexion étant parallèle à la direction générale du barreau et la jauge de l'ensemble sensible à la torsion étant inclinée sur cette direction, par exemple de 45°.

Dans la pratique, chacun des trois ensembles à jauge de déformation est sensible à la fois à la flexion et à la torsion, mais pour des parts différentes, de sorte que, par l'élimination de la composante de torsion dans le signal sortant, la composante de flexion formant ce signal sortant est essentiellement définie par les deux ensembles sensibles à la flexion et, pour une faible part, par l'ensemble sensible à la torsion.

On comprendra bien l'invention à la lecture de la description qui va suivre, en référence aux dessins annexés dans lesquels:

Fig. 1 est une couple verticale d'un appareil selon l'invention, cette coupe étant faite par l'axe du barreau;

Fig. 2 est une vue en plan de l'appareil de la Fig. 1;

Fig. 3 montre le pont extensométrique constitué avec les jauges de l'appareil des Fig. 1 et 2;

Fig. 4 montre un barreau équipé de jauges suivant un autre agencement;

Fig. 5 montre le pont extensométrique constitué avec les jauges de la Fig. 4; et

Fig. 6 et 7 sont des vues analogues aux Fig. 4 et 5, respectivement, et relatives à une autre variante.

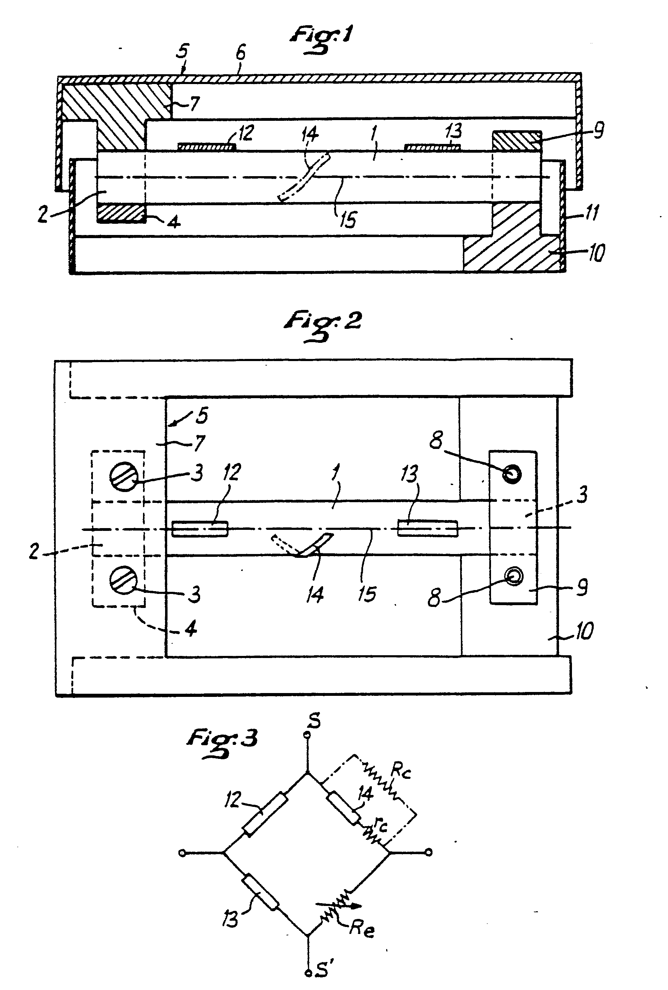

L'appareil de pesage, notamment un pèse-personne, représenté aux Fig. 1 et 2, comporte un élément sensible 1 constitué par un barreau unique cylindrique, c'est-à-dire de section constante; de préférence, comme représenté, le barreau 1 est de section circulaire, mais cette section pourrait être d'une autre forme courbe, par exemple elliptique, ou encore polygonale, par exemple carrée ou rectangulaire, ou encore profilée (T, H, I, U, C, L,...).

A une extrémité 2, le barreau 1 est solidarisé, par exemple par bridage à l'aide de vis 3 et d'une bride de serrage 4, avec un plateau 5 de support de charge constitué par une plateau proprement dit 6 et par un structure de support 7 en forme de fourche ou de cadre, à laquelle est fixé le plateau 6 et qui est immobilisée directement sur l'extrémité 2.

A son autre extrémité 3, le barreau 1 est solidarisé, par exemple également par bridage à l'aide de vis 8 et d'une bride 9, avec une embase 10 par laquelle l'appareil repose sur son support, par exemple le sol. L'embase peut recevoir un habillage latéral 11 dont le bord supérieur est recouvert par la jupe latérale du plateau 6. L'embase 10 est également en forme de fourche ou de cadre pour fournir un appui stable.

Le plateau 6 et l'habillage 11 ont été supprimés à la Fig. 2 pour la clarté du dessin.

Le barreau 1 est généralement horizontal, de même que la structure 7 et l'embase 10.

Le barreau 1 peut s'étendre parallèlement à un côté de l'appareil ou, le cas échéant, suivant une diagonale ou encore suivant un diamètre si l'appareil est circulaire.

Quand une charge à peser est placée sur le plateau 6, elle soumet le barreau 1 à des contraintes de flexion et éventuellement de torsion.

Pour mesurer ces contraintes, on fixe sur le barreau 1, généralement par collage, au moins deux jauges de déformation longitudinales 12, 13 et au moins une jauge de déformation 14, montrée en traits mixtes sur la Fig. 1, dont la direction est inclinée sur l'axe longitudinal 15 du barreau.

De préférence, les deux jauges longitudinales 12, 13 sont sur la même génératrice, par exemple sur la génératrice supérieure ou inférieure, et la jauge 14 est inclinée de 45° sur l'axe 15 du barreau de manière à avoir le maximum de sensibilité à la torsion.

Si la charge à peser est à l'aplomb de l'axe 15 du barreau, celui-ci ne travaille qu'en flexion, tandis que, si la charge est désaxée, le barreau travaille en flexion, mais aussi en torsion; dans ce cas, la déformation du barreau en torsion sollicite également les jauges longitudinales 12, 13 qui risquent alors de fausser la mesure.

La jauge inclinée 14 est principalement sensible à la torsion et, pour une moindre part, à la flexion. Son rôle est précisément de permettre d'annuler la partie du signal des jauges longitudinales 12, 13 qui est induite par la torsion.

Le traitement des signaux se fait au moyen du pont extensométrique de la Fig. 3; les jauges 12, 13 sont montées en série; les bornes de ce circuit série sont branchées sur les bornes S, S' de l'alimentation; en parallèle sur ce circuit série, on prévoit un deuxième circuit série constitué par la jauge 14 et une résistance d'équilibrage réglable $R_e$. Le signal est prélevé entre les jauges 12, 13, d'une part, et entre la jauge 14 et la résistance $R_e$, d'autre part. Pour annuler la composante de torsion dans le signal sortant, on prévoit une faible résistance $r_c$ en série avec la jauge 14 ou, comme montré en traits mixtes, une forte résistance $R_c$ en parallèle sur cette jauge 14.

Dans la variante de la Fig. 4, on adjoint aux jauges 12, 13 et 14 des Fig. 1 à 3 une quatrième jauge 17 inclinée sur l'axe 15 du barreau 1 d'un angle opposé à celui de la jauge 14, par exemple 45°.

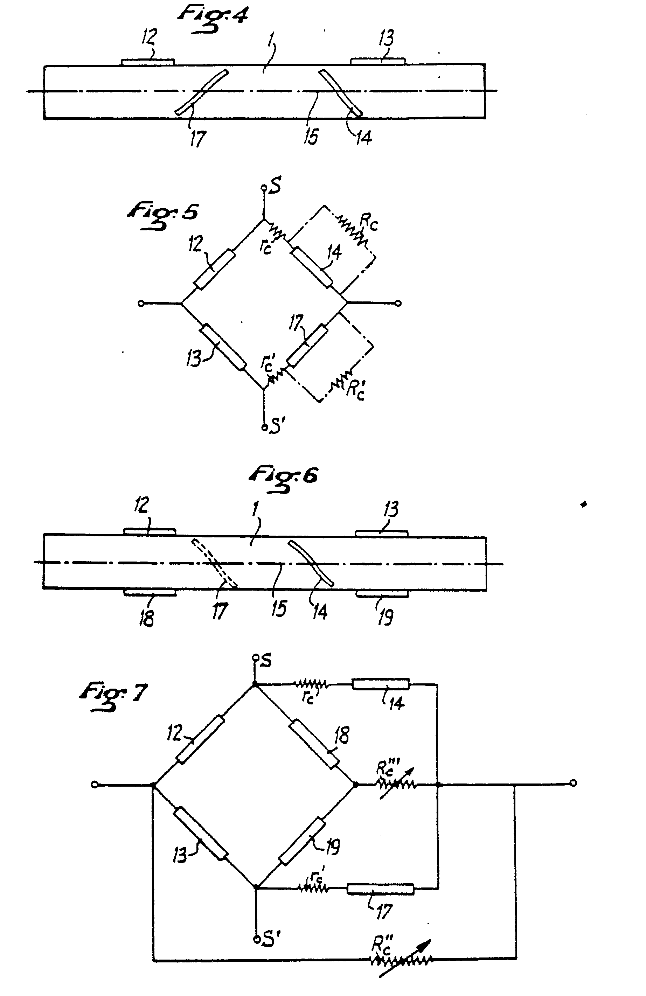

Le pont extensométrique de la Fig. 5 ne diffère de celui de la Fig. 3 que par le remplacement de la résistance $R_e$ par la jauge 17, les branches du pont comportant les jauges 14, 17 comprenant les faibles résistances série $r_c$, $r'_c$, ou de grandes résistances $R_c$, $R'_c$ en parallèle.

La variante de la Fig. 6 ne diffère de celle de la Fig. 4 que par l'adjonction d'une deuxième paire de jauges longitudinales 18, 19, situées par exemple sur une même génératrice et diamétralement opposées aux jauges 12, 13, et par le déplacement de position de la jauge 17 qui reste néanmoins inclinée sur l'axe 15 d'un angle opposé à celui de la jauge 14.

Le pont extensométrique de la Fig. 7, utilisé avec l'agencement de la Fig. 6, comporte trois circuits série montés entre les bornes d'alimentation S, S': un circuit comportant les jauges longitudinales 12, 13, un circuit comportant les jauges longitudinales 18, 19, un circuit comportant les jauges inclinées 14, 17, chacune associée à une faible résistance de correction $r_c$, $r'_c$ en série (ou à une forte résistance en parallèle), le signal sortant étant prélevé entre la borne commune aux jauges 12, 13 et la borne commune aux jauges 14, 17, une résistance réglable de correction $R''_c$ étant en parallèle sur les bornes de prélèvement du signal sortant, et une autre résistance réglable de correction $R'''_c$ étant prévue entre la borne commune aux jauges 18, 19 et la borne commune aux jauges 14, 17. Dans la pratique, une seule des résistances $R''_c$, $R'''_c$ est utilisée; leur circuit peut donc être ouverte, par exemple par un interrupteur.

Il apparaîtra à l'homme de l'art que d'autres agencements de ponts sont possibles.

Les positions relatives des jauges longitudinales et inclinées sur le barreau 1 ne sont pas en général déterminantes. Par exemple, une jauge inclinée pourrait être collée sur le barreau en même temps qu'une jauge longitudinale, pour former une double jauge croisée.

Dans chacune des réalisations décrites ci-dessus à titre d'exemple, on n'utilise qu'un seul barreau de déformation et les erreurs de mesure induites par les jauges longitudinales lors de la torsion du barreau sont annihilées par la ou les jauges inclinées.

Bien qu'on ait décrit des ensembles à jauge unique et un barreau de section constante, il va de soi que diverses variantes équivalentes sont possibles. C'est ainsi que, le barreau ayant une section variable, cette section pourrait même varier d'une zone de mesure du moment de flexion à l'autre, la correction se faisant alors dans le pont extensométrique, adapté à cet effet, pour que les signaux provenant des deux ensembles sensibles à la flexion soient les mêmes. Il est également possible de prévoir plusieurs jauges par ensemble de mesure.

## Revendications

1. Appareil de pesage à jauges de contraintes, notamment pèse-personne, comportant un barreau unique (1) solidarisé à ses extrémités (2, 3) respectivement avec un plateau (5, 6, 7) de réception de charge et avec une assise de support (10) et au moins deux ensembles (12, 13; 18, 19) à jauges de déformation fixés au barreau (1), sensibles à la flexion du barreau (1) sous l'effet de la charge appliquée, caractérisé par le fait que ces ensembles (12, 13; 18, 19), en association avec la zone du barreau (1) avec laquelle ils coopèrent et avec un circuit de traitement des signaux émis par les jauges, ont la même sensibilité de mesure pour une même charge appliquée, et qu'il est prévu au moins un troisième ensemble (14, 17) à jauges de déformation fixé au barreau (1), sensible à la torsion du barreau (1) sous l'effet de la charge appliquée, et un circuit de traitement des signaux émis par lesdits trois ensembles (12, 13; 18, 19; 14, 17) à jauges de déformation, comportant des moyens pour combiner lesdits signaux de manière à éliminer dans le signal sortant la composante résultant de la déformation du barreau (1) en torsion.

2. Appareil selon la revendication 1, caractérisé par le fait que les deux premiers ensembles (12, 13; 18, 19) comportent des jauges identiques coopérant avec le barreau (1) dans des zones de même section.

3. Appareil selon l'une des revendications 1 et 2, caractérisé par le fait que le barreau (1) est de section constante, par exemple polygonale notamment carrée, rectangulaire,..., ou courbe, notamment circulaire, elliptique,..., ou profilée par exemple en T, H, I, U, C, L,..., le barreau (1) étant plein ou creux.

4. Appareil selon l'une des revendications 1 et 2, caractérisé par le fait que le barreau (1) est de section variable.

5. Appareil selon l'une des revendications 1 à 4, caractérisé par le fait que chacun des trois ensembles comporte une seule jauge, la jauge (12, 13, 18, 19) de chaque ensemble sensible à la flexion étant parallèle à la direction générale du barreau (1) et la jauge (14, 17) de l'ensemble sensible à la torsion étant inclinée sur cette direction, par exemple de 45°.

6. Appareil selon la revendication 5, caractérisé par le fait que deux jauges sont sur une même ligne parallèle à ladite direction, par exemple sur une génératrice.

7. Appareil selon l'une des revendications 1 à 6, caractérisé par le fait qu'il comporte quatre ensembles sensibles à la flexion.

8. Appareil selon l'une des revendications 1 à 7, caractérisé par le fait qu'il comporte deux ensembles sensibles à la torsion, leurs jauges étant inclinées sur l'axe (15) du barreau (1) suivant des angles opposés.

9. Appareil selon l'une des revendications 1 à 8, caractérisé par le fait que le circuit de traitement est du type pont extensométrique comportant, dans ou sur la branche équipée d'une jauge de l'ensemble sensible à la torsion, une résistance de correction.

10. Appareil selon l'une des revendications 1 à 9, caractérisé par le fait que le plateau de réception de la charge comporte un plateau proprement dit (6), une structure de support (7) solidarisée avec une extrémité (2) du barreau (1), par exemple par bridage, et agencée en forme de fourche ou de cadre.

11. Appareil selon l'une des revendications 1 à 10, caractérisé par le fait que l'assise de support (10) est fixée à une extrémité (3) du barreau (1) par exemple par bridage et est agencée en forme de fourche ou de cadre.

**Patentansprüche**

1. Gerät zum Wiegen mittels Dehnungsmessern, insbesondere Personenwaage, mit einem einzelnen Stab (1), der mit seinen Enden (2, 3) jeweils mit einer Lastaufnahmeplattform (5, 6, 7) und einem Stützsockel (10), und mindestens zwei an der Stange (1) befestigten Dehnungsmeßgruppen (12, 13; 18, 19), die auf die Biegung der Stange (1) unter der aufgebrachten Last ansprechen, dadurch gekennzeichnet, daß diese Gruppen (12, 13; 18, 19) in Verbindung mit dem Bereich der Stange (1), mit dem sie zusammenwirken, und mit einer Schaltung zur Verarbeitung der von den Dehnungsmessern abgegebenen Signale dieselbe Meßempfindlichkeit für eine gleiche aufgebrachte Last aufweisen, und daß mindestens eine dritte Gruppe (14, 17) von an der Stange (1) befestigten Dehnungsmessern vorgesehen ist, die auf die Torsion der Stange (1) unter der aufgebrachten Last ansprechen, sowie ferner eine Schaltung zur Verarbeitung der von den drei Dehnungsmeßgruppen (12, 13; 18, 19; 14, 17) abgegebenen Signale mit Einrichtungen zum Kombinieren dieser Signale derart, daß im austretenden Signal die resultierende Komponente der Torsionsverformung der Stange (1) eliminiert wird.

2. Gerät nach Anspruch 1, dadurch gekennzeichnet, daß die zwei ersten Gruppen (12, 13; 18, 19) identische Dehnungsmesser aufweisen, die mit der Stange (1) in den Bereichen desselben Querschnittes zusammenarbeiten.

3. Gerät nach einem der Ansprüche 1 und 2, dadurch gekennzeichnet, daß die Stange (1) konstanten Querschnitt aufweist, beispielsweise Polygonalen, insbesondere quadratischen, rechteckförmigen..., oder gekrümmten, insbesondere kreisförmigen, elliptischen,..., oder profilierten, beispielsweise in Form eines T-, H-, I-, U-, C-, L-... -Profiles, wobei die Stange (1) entweder Vollquerschnitt aufweist oder hohl ausgebildet ist.

4. Gerät nach einem der Ansprüche 1 und 2, dadurch gekennzeichnet, daß die Stange (1) veränderlichen Querschnitt aufweist.

5. Gerät nach einem der Ansprüche 1 bis 4, dadurch gekennzeichnet, daß jeder der drei Gruppen einen einzelnen Dehnungsmesser aufweist, wobei der Dehnungsmesser (12, 13, 18, 19) jeder Gruppe, der auf die Biegung anspricht, parallel zur Hauptrichtung des der Stange (1) gerichtet ist und der Messer (14, 17) der auf die Torsion ansprechende Gruppe schräg zu dieser Richtung, beispielsweise 45° hierzu, angeordnet ist.

6. Gerät nach Anspruch 5, dadurch gekennzeichnet, daß zwei Dehnungsmesser auf derselben Linie parallel zu dieser Richtung, beispielsweise auf einer Erzeugenden, angeordnet sind.

7. Gerät nach einem der Ansprüche 1 bis 6, dadurch gekennzeichnet, daß vier auf die Biegung ansprechende Gruppen vorhanden sind.

8. Gerät nach einem der Ansprüche 1 bis 7, dadurch gekennzeichnet, daß zwei auf die Torsion ansprechende Gruppen vorhanden sind, deren Meßglieder schräg zur Achse (15) der Stange (1) entsprechend entgegengesetzten Winkeln angeordnet sind.

9. Gerät nach einem der Ansprüche 1 bis 8, dadurch gekennzeichnet, daß der Verarbeitungsschaltkreis durch eine Dehnungsmeßbrücke gebildet ist, welche in oder auf dem mit einem auf die Torsion ansprechenden Meßglied der Gruppe einen Korrekturwiderstand aufweist.

10. Gerät nach einem der Ansprüche 1 bis 9, dadurch gekennzeichnet, daß die Aufnahmeplattform für die Last eine eigentliche Plattform (6) sowie einen Stützrahmen (7) aufweist, der mit einem Ende (2) der Stange (1) beispielsweise durch Kaltstauchen verbunden und in Form einer Gabel oder einer Fassung ausgebildet ist.

11. Gerät nach einem der Ansprüche 1 bis 10, dadurch gekennzeichnet, daß der Stützsockel (10) an einem Ende (3) der Stange (1) beispielsweise durch Kaltstauchen verbunden und in Form einer Gabel oder einer Fassung ausgebildet ist.

**Claims**

1. A weighing machine having strain gauges, more particularly a machine for weighing people, comprising a single bar (1) made integral at its ends (2, 3) respectively with a load reception plate (5, 6, 7) and with a support seat (10) and at least two assemblies (12, 13; 18, 19) of deformation gauges fixed to the bar (1), sensitive to the flexure of the bar (1) under the effect of the load applied, characterised in that these assemblies (12, 13; 18, 19), in association with the zone of the bar (1) with which they co-operate and with a circuit for processing the signals issued by the gauges, have the same measurement sensitivity for one and the same applied load, and in that there is provided at least one third assembly (14, 17) of deformation gauges which is fixed to the bar (1), sensitive to the torsion of the bar (1) under the effect of the applied load, and a circuit for processing the signals issued by the said three assemblies (12, 13; 18, 19; 14, 17) of deformation gauges, comprising means for combining the said signals so as to eliminate in the outgoing signal the component resulting from the deformation of the bar (1) in torsion.

2. A machine according to claim 1, characterised in that the two first assemblies (12, 13; 18, 19) comprise identical gauges co-operating with the bar (1) in zones of the same cross-section.

3. A machine according to one of claims 1 and 2, characterised in that the bar (1) is of constant cross-section, for example polygonal, more particularly square, rectangular, or curved, more particularly circular, elliptical, or profiled, for example as T, H, I, U, C, L, the bar (1) being solid or hollow.

4. A machine according to one of claims 1 and 2, characterised in that the bar (1) is of variable cross-section.

5. A machine according to one of claims 1 to 4, characterised in that each of the three assemblies comprises a single gauge, the gauge (12, 13, 18, 19) of each assembly sensitive to flexure being parallel to the general direction of the bar (1) and the gauge (14, 17) of the assembly sensitive to torsion being inclinded to this direction, for example by 45°.

6. A machine according to claim 5, characterised in that two gauges are on one and the same line parallel to the said direction, for example on a generatrix.

7. A machine according to one of claims 1 to 6, characterised in that it comprises four assemblies sensitive to flexure.

8. A machine according to one of claims 1 to 7, characterised in that it comprises two assemblies sensitive to torsion, their gauges being inclined to the axis (15) of the bar (1) at opposing angles.

9. A machine according to one of claims 1 to 8, characterised in that the processing circuit is of the Wheatstone bridge type comprising, in or on the branch equipped with a gauge of the assembly sensitive to torsion, a correction resistance.

10. A machine according to one of claims 1 to 9, characterised in that the load reception plate comprises a plate proper (6), and a support structure (7) made integral with one end (2) of the bar (1), for example by clamping, and arranged in the form of a fork or of a frame.

11. A machine according to one of claims 1 to 10, characterised in that the support seat (10) is fixed on one end (3) of the bar (1) for example by clamping and is arranged in the form of a fork or of a frame.

*Fig.1*

*Fig.2*

*Fig.3*

0 126 745

Fig.4

Fig.5

Fig.6

Fig.7

2